# EUROPEAN PATENT SPECIFICATION

(11) **EP 2 887 201 B1**
(45) Date of publication and mention of the grant of the patent: **05.02.2020**
(21) Application number: 14197044.2
(22) Date of filing: 09.12.2014
(51) Int. Cl.: G06F 3/0488, G06F 1/16, H04M 1/725, G04G 21/04, G04G 9/00

(54) **Mobile terminal and controlling method thereof**
Mobiles Endgerät und Steuerungsverfahren dafür
Terminal mobile et son procédé de contrôle

(30) Priority: 17.12.2013 KR 20130156874
(43) Date of publication of application: 24.06.2015
(73) Proprietor: LG Electronics Inc., Seoul 07336 (KR)
(72) Inventor: Yang, Eunho, 137-893 Seoul (KR)
(74) Representative: Plasseraud IP

(56) References cited:
- EP-A2- 2 360 902
- US-A1- 2009 051 649
- US-A1- 2013 278 484

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a search for a previously performed job per process or time.

### Discussion of the Related Art

Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

To support and increase the terminal functions, it may be able to consider the improvement of structural parts and/or software parts of the terminal.

Recently, as various and complicated functions can be performed through mobile terminals, the demand for a mobile terminal capable of conveniently searching and paging a previously performed job per process or time is rising. EP2360902 discloses a functionality for an electronic device wherein history information is provided to a user on the basis of a change to a time of a displayed analogue clock. US2013/278484 discloses a method of controlling a mobile terminal wherein a connection is established between the mobile terminal and an external terminal and the application window of an application on the mobile terminal is displayed on a display of the external terminal.

### SUMMARY OF THE INVENTION

The present invention is set out in the appended set of claims. Accordingly, the present invention is directed to a mobile terminal and controlling method thereof that substantially obviate one or more problems due to limitations and disadvantages of the related art.

An object of the present invention is to provide a mobile terminal and controlling method thereof, by which a previously performed job can be conveniently searched and paged per process or time.

In particular, one object of the present invention is to provide a mobile terminal and controlling method thereof, by which a process or time can be selected using a watch of an analog type displayed on a touchscreen.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to one embodiment of the present invention may include a touchscreen, a wireless communication unit configured to communicate with an external terminal, and a controller, if a preset condition is met, receiving an information on a process previously performed in the external terminal from the external terminal through the wireless communication unit, the controller, if a hand rotatable on the touchscreen is rotated in response to a touch input, controlling a process information corresponding to one of processes included in the received information to be displayed on the touchscreen in response to a rotation angle of the hand, the controller, if the displayed process information is selected, controlling an information on the selected process to be sent to the external terminal in order for the process corresponding to the selected region to be paged in the external terminal.

In an example useful for understanding the present invention, as embodied and broadly described herein, a mobile terminal according to another embodiment of the present invention may include a touchscreen and a controller, if a preset condition is met, determining an information on a previously performed process, the controller, if a hand rotatable on the touchscreen is rotated in response to a touch input, controlling a process information corresponding to one of the determined processes to be displayed on the touchscreen in response to a rotation angle of the hand, the controller, if the displayed process information is selected, controlling a process corresponding to the selected region to be paged.

In another aspect of the present invention, as embodied and broadly described herein, a method of controlling a mobile terminal according to claim 7 is provided.

Accordingly, the present invention provides the following effects and/or features.

First of all, a previously performed job can be conveniently searched and paged per process or time.

Secondly, a process or timing point can be conveniently changed and selected in a manner of moving the hands of an analog type watch displayed on a touchscreen.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2 is a front perspective diagram of a mobile terminal according to one embodiment of the present invention;
FIG. 3 is a diagram for one example of a configuration that an analog type watch applicable to embodiments of the present invention is displayed on a touchscreen;
FIG. 4 is a perspective diagram for one example of a mobile terminal 100 of a watch type according to one embodiment of the present invention;
FIG. 5 is a flowchart for one example of a method for searching and paging a previously performed process using an analog type watch in a mobile terminal according to one embodiment of the present invention;
FIG. 6 is a diagram for one example of a procedure for triggering a hand manipulating mode according to one embodiment of the present invention;
FIG. 7 is a diagram for one example of a procedure for a webpage reading to proceed in a mobile terminal according to one embodiment of the present invention;
FIG. 8 is a diagram for one example of a procedure for performing a hand manipulating mode in a watch type mobile terminal according to one embodiment of the present invention;
FIG. 9 is a flowchart for one example of a method for searching and paging a previously performed process through a region division of an analog type watch in a mobile terminal according to one embodiment of the present invention;
FIG. 10A is a diagram for one example of a procedure for performing a hand manipulating mode in a watch type mobile terminal according to one embodiment of the present invention;
FIG. 10B is a diagram for one example of a process paging method in response to a selection of a region corresponding to a specific process in a mobile terminal according to one embodiment of the present invention;
FIG. 11A is a diagram for one example of a process proceeding procedure in a mobile terminal according to one embodiment of the present invention;
FIG. 11B is a diagram for one example of a configuration that a hand manipulating mode is triggered in response to a tag to a watch type mobile terminal in a mobile terminal according to one embodiment of the present invention;
FIG. 12 is a diagram for one example of a paging procedure in accordance with a process selection in a mobile terminal according to one embodiment of the present invention;
FIG. 13 is a diagram for one example of an operation in case that a hand manipulation mode is unable to be triggered in a watch type mobile terminal according to one embodiment of the present invention;
FIG. 14 is a diagram for one example of a procedure for confirming and paging a process in accordance with a time change through an analog watch in a mobile terminal according to another embodiment of the present invention;
FIG. 15 is a diagram for one example of a configuration that a hand manipulating mode is performed if a predetermined number of processes or more exist in an interval selected by a minute hand in a mobile terminal according to another embodiment of the present invention;
FIG. 16 is a diagram for one example of a configuration that a hand manipulating mode is performed in a mobile terminal according to further embodiment of the present invention; and
FIG. 17 is a diagram for one example of a menu configuration for selecting a target application, which is to be counted as a process in a hand manipulating mode, according to embodiments of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used to denote elements in order to facilitate the disclosure only. Therefore, significant meanings or roles are not given to the suffixes themselves, and it is understood that the suffixes 'module', 'unit' and 'part' can be used together or interchangeably.

Features of embodiments of the present invention are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

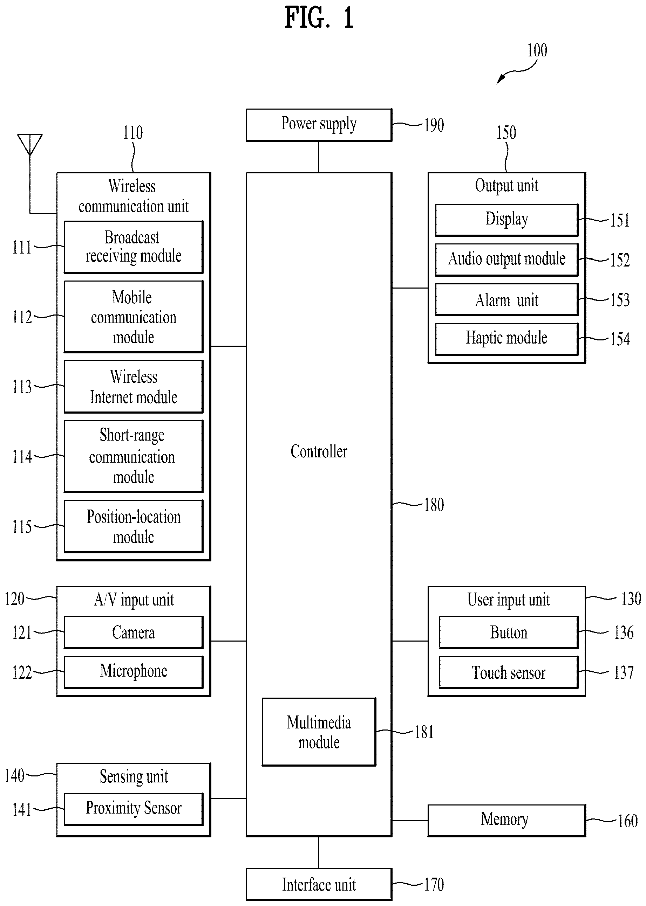

FIG. 1 is a block diagram of a mobile terminal 100 in accordance with an embodiment of the present invention. With reference to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this instance, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLO™) and integrated services digital broadcast-terrestrial (ISDB-T). Optionally, the broadcast receiving module 111 can be configured to be suitable for other broadcasting systems as well as the above-noted digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), HSDPA (High Speed Downlink Packet Access), GSM, CDMA, WCDMA, or LTE (Long Term Evolution).

Wireless Internet access by Wibro™, HSPDA, GSM, CDMA, WCDMA, or LTE is achieved via a mobile communication network. In this regard, the wireless Internet module 113 may be considered as being a kind of the mobile communication module 112 to perform the wireless Internet access via the mobile communication network.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module. The GPS module 115 can precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and time information are then amended (or corrected) using another satellite. In addition, the GPS module 115 can calculate speed information by continuously calculating a real-time current location.

With continued reference to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Furthermore, the processed image frames can be displayed on the display 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch. FIG. 1 also illustrates the user input unit 130 can include a button 136 (hard or soft button) and a touch sensor 137.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100.

As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply unit 190, and the presence or absence of a coupling or other connection between the interface unit 170 and an external device. According to one embodiment, the sensing unit 140 can include a proximity sensor 141.

The output unit 150 generates output relevant to the senses of sight, hearing, and touch. Furthermore, the output unit 150 includes the display 151, an audio output module 152, an alarm unit 153, a haptic module 154, and a projector module 155.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented in a transparent or optical transmittive type, i.e., a transparent display. A representative example of the transparent display is the TOLED (transparent OLED). A rear configuration of the display 151 can be implemented as the optical transmittive type as well. In this configuration, a user may be able to see an object located at the rear of a terminal body on a portion of the display 151 of the terminal body.

At least two displays 151 can be provided in the mobile terminal 100 in accordance with one embodiment of the mobile terminal 100. For instance, a plurality of displays can be arranged to be spaced apart from each other or to form a single body on a single face of the mobile terminal 100. Alternatively, a plurality of displays can be arranged on different faces of the mobile terminal 100.

If the display 151 and a sensor for detecting a touch action (hereinafter called 'touch sensor') are configured as a mutual layer structure (hereinafter called 'touchscreen'), the display 151 is usable as an input device as well as an output device. In this instance, the touch sensor can be configured as a touch film, a touch sheet, or a touchpad.

The touch sensor can be configured to convert pressure applied to a specific portion of the display 151 or a variation of capacitance generated from a specific portion of the display 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may be named 'contact touch'. In addition, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations of these devices.

The alarm unit 153 outputs a signal for announcing the occurrence of a particular event associated with the mobile terminal 100. Typical events include a call received, a message received and a touch input received. The alarm unit 153 can output a signal for announcing the event occurrence by way of vibration as well as video or audio signal. The video or audio signal can be output via the display 151 or the audio output module 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 can generate various tactile effects as well as the vibration. For instance, the haptic module 154 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with an embodiment of the mobile terminal 100.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 160.

Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 100 can operate in association with a web storage for performing a storage function of the memory 160 on the Internet.

The interface unit 170 may be implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 100 via the corresponding port.

When the mobile terminal 100 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component.

Moreover, the controller 180 can perform a pattern (or image) recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 160, and executed by a controller or processor, such as the controller 180.

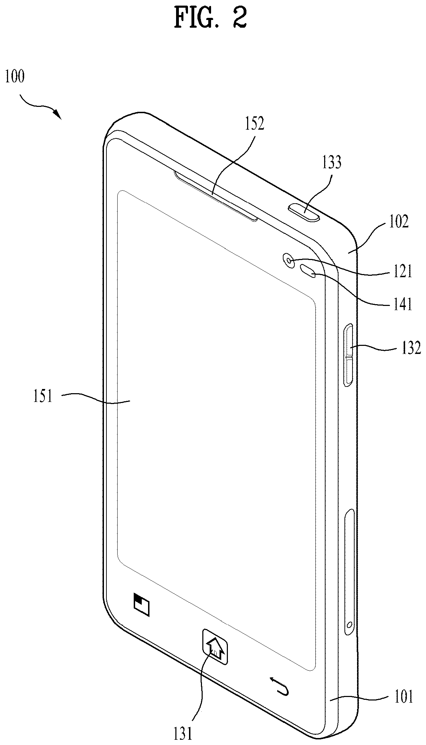

FIG. 2 is a front perspective view of a mobile terminal according to one embodiment of the present invention. The mobile terminal 100 illustrated in FIG. 2 has a bar type terminal body. However, the mobile terminal 100 may be implemented in a variety of different configurations. Examples of such configurations include folder-type, slide-type, rotational-type, swing-type and combinations thereof. For ease of description, the following disclosure will primarily relate to a bar-type mobile terminal 100. However, the present invention applies equally to other types of mobile terminals.

Referring to FIG. 2, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output module 152, a camera 121, manipulating units 131 and 132, a microphone 122, and an interface unit 170 can be provided at the terminal body, and more particularly, at the front case 101. Manipulating units 131 and 132 are part of the user input unit 130.

The display 151 occupies most of a main face of the front case 101. The audio output module 152 and the camera 121 are provided at an area adjacent to an end portion of the display 151, while the manipulating unit 131 and the microphone 122 are provided at an area adjacent to the other end portion of the display 151. The manipulating unit 132 and the interface unit 170 can be provided at lateral sides of the front and rear cases 101 and 102. Another manipulating unit 133 can be provided on a top portion of the case 102.

The user input unit 130 is manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by manipulating units 131 and 132 can be divided between the two. For instance, a command such as start, end, and scroll is input to first manipulating unit 131. Furthermore, a command for a volume adjustment of sound output from the audio output module 152, or a command for a switching to a touch recognizing mode of the display 151 can be input to second manipulating unit 132.

Meanwhile, such a graphic for pointing at a specific object on a display unit or selecting a menu from the display unit as an arrow, a finger and the like is called a pointer or a cursor. However, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

### Process Search & Shortcut Using Analog Watch Displayed on Touchscreen

According to one embodiment of the present invention, it is proposed use a method of turning the hands of an analog type watch displayed on a touchscreen to search for a previously performed process.

In particular, in a process searching and paging (shortcut) method according to one embodiment of the present invention, when a specific trigger condition is met, an information corresponding to a previously performed process is displayed on an analog watch. If an information corresponding to a specific process is selected by a movement of a specific hand of the analog watch, a shortcut to the corresponding process can be executed.

In this case, the concept of a watch of an analog type can be compared to that of a watch of a digital type. And, the watch of the analog type means a watch configured to display a current hour in a manner that at least one hand of the watch makes a circular motion along a flow of time. And, the process is a unit of identifying a job and can be identified by an application unit or a function/menu/content change unit in a single application. For instance, when three different applications are sequentially run, it can be regarded as 3 processes are present. For another instance, in case that a webpage is changed 5 times due to a link selection, a favorites (or bookmark) selection or the like in a web browser application, it can be regarded as 5 processes are present. For further instance, in case that 10 images are watched in a gallery application, it can be regarded as 10 processes are present.

A process performed device and an analog watch displayed/manipulated device may include the devices equal to or different from each other. If those devices are different, a main agent in performing a process may include the mobile terminal 100. And, the analog watch displayed device may include an external device connected to the mobile terminal 100 by wire/wireless. If a prescribed one of previously performed processes is selected through the external device, a paging of the corresponding process can be performed by the mobile terminal 100.

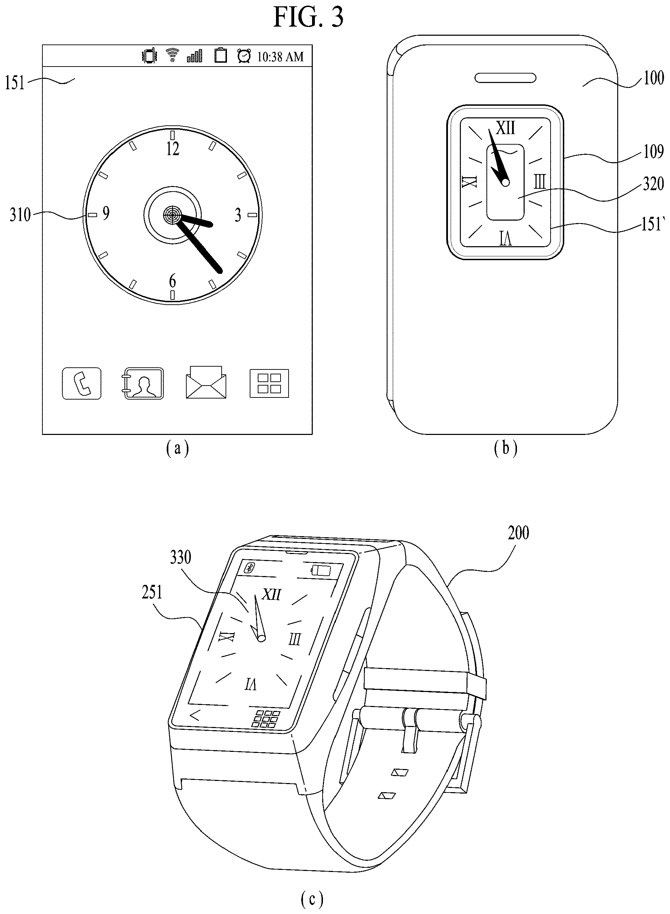

A situation for displaying an analog watch according to the present invention is described in detail with reference to FIG. 3 as follows.

FIG. 3 is a diagram for one example of a configuration that an analog type watch applicable to embodiments of the present invention is displayed on a touchscreen.

Referring to FIG. 3 (a), a watch of an analog type can be displayed in a shape of a watch widget 310 of a home screen on the touchscreen 151 of the mobile terminal 100. Of course, the watch widget 310 may be displayed on a lock screen as well as on the home screen. For instance, referring to FIG. 3 (b), an analog watch 320, which is displayed through an exposed portion when a portion 151' of the touchscreen 151 is exposed through an opening 109 provided to a cover, is applicable to the present invention. For another instance, an analog watch 330, which is displayed on a touchscreen 251 of a watch type mobile terminal 200, is applicable to the present invention as well. In this case, the watch type mobile terminal 200 is functionally dependent on the mobile terminal 100 in part at least or can operate independently.

The locations, shapes and situations for displaying the respective analog watches shown in FIG. 3 are exemplarily provided, by which the analog watch according to the present invention is non-limited. For example, the analog watch according to the present invention is applicable to any situations in which the analog watch is displayable.

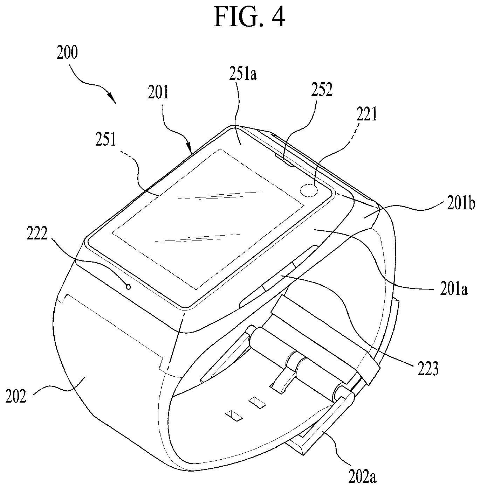

A mobile terminal of a watch type is described in detail with reference to FIG. 4 as follows.

FIG. 4 is a perspective view illustrating a watch-type mobile terminal 200 as one example a wearable device in accordance with embodiments of the present invention.

As illustrated in FIG. 4, the watch-type mobile terminal 200 includes a main body 201 with a display unit 251 and a band 202 connected to the main body 201 to be wearable on a wrist.

The main body 201 may include a case having a certain appearance. As illustrated, the case may include a first case 201a and a second case 201b cooperatively defining an inner space for accommodating various electronic components. Other configurations are possible. For instance, a single case may alternatively be implemented, with such a case being configured to define the inner space, thereby implementing a mobile terminal 200 with a uni-body. In this case, various electrical/electronic parts included in the case can be configured to perform at least the same or similar functions of the respective components described with reference to FIG. 1. For instance, a controller is provided to a watch type mobile terminal. And, a wireless communication unit, an interface unit, a memory and the like can be further provided to the watch type mobile terminal if necessary.

The watch-type mobile terminal 200 can perform wireless communication, and an antenna for the wireless communication can be installed in the main body 201. The antenna may extend its function using the case. For example, a case including a conductive material may be electrically connected to the antenna to extend a ground area or a radiation area.

The display unit 251 is shown located at the front side of the main body 201 so that displayed information is viewable to a user. In some embodiments, the display unit 251 includes a touch sensor so that the display unit can function as a touch screen. As illustrated, window 251a is positioned on the first case 201a to form a front surface of the terminal body together with the first case 201a.

The illustrated embodiment includes audio output module 252, a camera 221, a microphone 222, and a user input unit 223 positioned on the main body 201. When the display unit 251 is implemented as a touch screen, additional function keys may be minimized or eliminated. For example, when the touch screen is implemented, the user input unit 223 may be omitted.

The band 202 is commonly worn on the user's wrist and may be made of a flexible material for facilitating wearing of the device. As one example, the band 202 may be made of fur, rubber, silicon, synthetic resin, or the like. The band 202 may also be configured to be detachable from the main body 201. Accordingly, the band 202 may be replaceable with various types of bands according to a user's preference.

In one configuration, the band 202 may be used for extending the performance of the antenna. For example, the band may include therein a ground extending portion (not shown) electrically connected to the antenna to extend a ground area.

The band 202 may include fastener 202a. The fastener 202a may be implemented into a buckle type, a snap-fit hook structure, a Velcro® type, or the like, and include a flexible section or material. The drawing illustrates an example that the fastener 202a is implemented using a buckle.

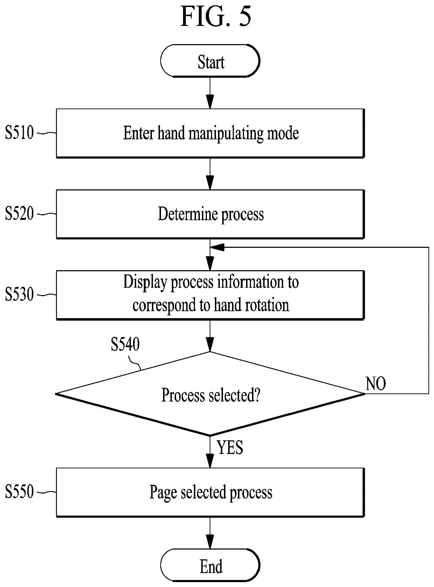

In the following description, a method or procedure for searching and paging a previously performed process through the watch of the analog type mentioned in the foregoing description is explained in detail with reference to FIG. 5. For clarity, a state for running a function of searching and paging a process by manipulating a watch of an analog type shall be named 'hand manipulating mode'.

FIG. 5 is a flowchart for one example of a method for searching and paging a previously performed process using an analog type watch in a mobile terminal according to one embodiment of the present invention.

Referring to FIG. 5, as a preset condition is met, a hand manipulating mode can be entered [S510]. In this case, the preset condition may mean one of a menu selection corresponding to a hand manipulating mode, a wire/wireless signal reception from an external environment and the like. For example, a case of receiving a signal externally may include one of a case of detecting that the watch type mobile terminal 200 comes in contact with the mobile terminal 100, a case of detecting that the watch type mobile terminal 200 enters a range of a predetermined distance, a case of selecting a specific button from the watch type mobile terminal 200, and the like. Of course, before the hand manipulating mode is entered, it is preferable that an analog watch is displayed in advance on at least one mobile terminal involved in the implementation of the present invention.

Subsequently, the controller 180 determines an information on a process previously performed prior to the hand manipulating mode entry. In particular, a process currently performed by the mobile terminal may be included in or excluded from the previously performed process in accordance with necessity or settings. In doing so, in determining the information on the process, the controller 180 can consider the number of processes. In determining the number of processes, a unit and time of a process can be taken into consideration. For instance, in case that a target of a process count includes a menu/content performed on a currently running application, it is able to count the number of menus/contents run/displayed until the hand manipulating mode entry after running the corresponding application. For another instance, if a target of the process count is performed by an application unit, the count target may be limited to the number of applications performed during a prescribed unit time.

Once the information on the process is determined, a single hand may be displayed on the analog watch. In this case, the displayed hand may be rotated or turned clockwise or counterclockwise in response to a user's touch input. In response to the hand rotation, the controller 180 can control the process information to be displayed on the watch displayed touchscreen to correspond to the hand rotation [S530]. In this case, 'corresponding to the hand rotation' may mean that an information displayed process is changed sequentially in response to a rotation of the hand at a predetermined angle. For instance, if the hand is rotated at 0 ∼ n degrees, the information on a last executed process is displayed. For another instance, if the hand is rotated at n ∼ 2n degrees, the information on a process executed prior to the last executed process can be displayed.

In this case, the information on the process can include a preview information. In particular, the preview information is the information for informing a user of a type or status of a process. When the corresponding process is run, a screenshot image, a text/icon information or the like may correspond to the preview information.

While the hand is rotated, when the information on the process desired to be paged by the user is displayed, if the user selects the corresponding process [S540], the selected process can be paged again [S550].

In the above procedure described with reference to FIG. 5, if an analog watch displayed device is identical to a process performed/paged device, all the steps can be performed within the corresponding device. On the contrary, if an analog watch displayed device is different from a process performed and paged device, the step S510 is simultaneously entered by the two devices. And, the step S520 is performed by the process performed and paged device. Subsequently, if the information on the process is delivered to the analog watch displayed device, the step S530 and the step S540 can be performed in the analog watch displayed device. A result of the step S540 can be delivered to the process performed and paged device to perform the step S550 again.

Meanwhile, in order to provide information (i.e., count information and preview information) on a determined process, the controller 180 of the mobile terminal 100 can control information, which is necessary to provide information each time a process is created or changed, to be saved in the memory 160.

In the following description, an analog watch displayed on a touchscreen shall be indicated by a reference number 300 irrespective of a display location/shape/device unless mentioned especially. Assume that an analog watch displayed device may include a watch type mobile terminal 200. And, assume that a process performed and paged device may include a mobile terminal 100. Moreover, assume a situation (e.g., Bluetooth paired states, etc.) that a data path for short range communication has been already established between the watch type mobile terminal 200 and the mobile terminal 100.

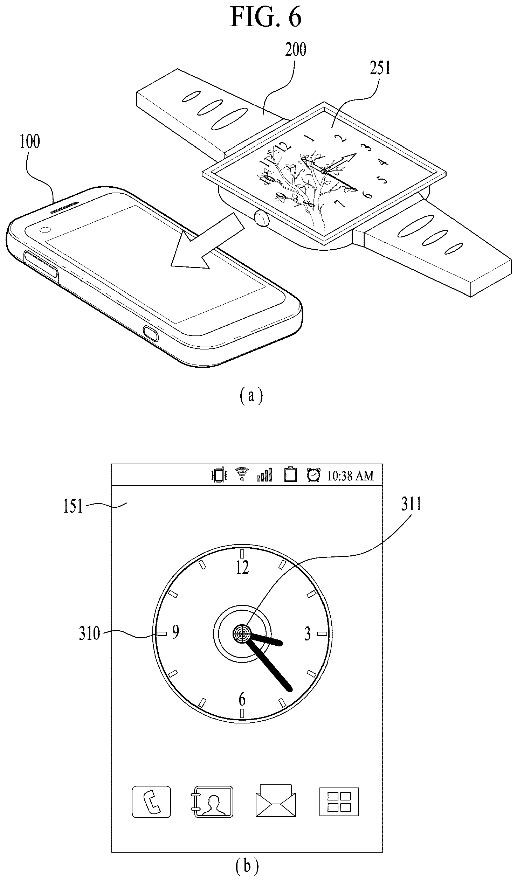

FIG. 6 is a diagram for one example of a procedure for triggering a hand manipulating mode according to one embodiment of the present invention.

Referring to FIG. 6 (a), if a watch type mobile terminal 200 having an analog watch displayed currently thereon approaches a mobile terminal 100 in a predetermined distance or less or comes in contact with the mobile terminal 100, a hand manipulating mode may be triggered. As one example of a method of determining a presence or non-presence of the approach/contact, there is NFC tagging using a short range communication module. And, it is a matter of course that any methods of determining a variation of a distance between the two mobile terminals are applicable to the corresponding determining method.

Referring to FIG. 6 (b), in case that each of an analog watch displayed device and a process performed and paged device includes a mobile terminal 100, a hand manipulating mode can be triggered by such a touch input as an input of selecting a hand rotation axis 311 of a watch widget 310 displayed on a touchscreen 151, an input of touching an hour hand and a minute hand simultaneously and the like.

Besides, it is a matter of course that a hand manipulating mode can be triggered by a selection of an icon of a shortcut to the hand manipulating mode or a selection of a key button set for the hand manipulating mode [not shown in the drawing].

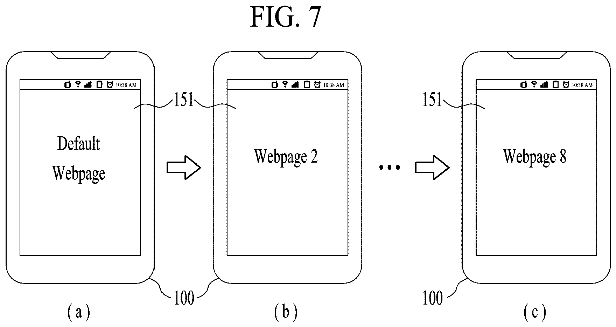

In the following description, in case that each webpage read through a web browser is counted as a single process, a procedure for paging a previously read webpage is explained in detail with reference to FIGs. 7 to 9.

FIG. 7 is a diagram for one example of a procedure for a webpage reading to proceed in a mobile terminal according to one embodiment of the present invention. For clarity, a detailed webpage configuration is omitted and each webpage is identified by a text numbering.

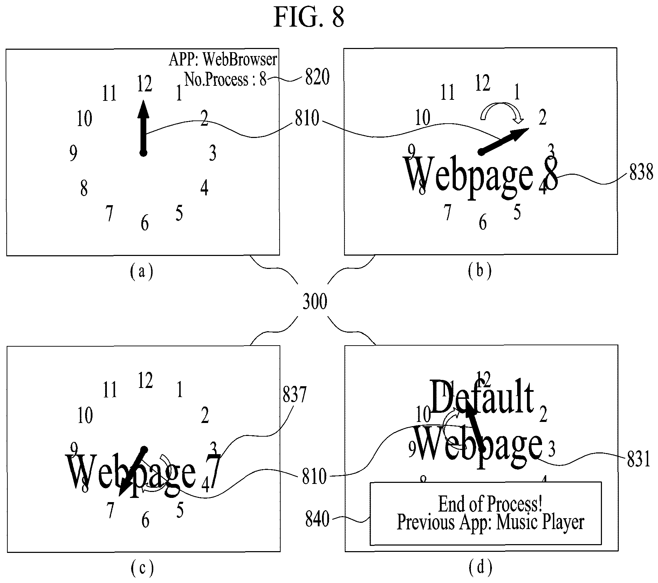

Referring to FIG. 7, as a web browser application is run in a mobile terminal 100, an initial webpage (i.e., 1^{st} webpage) is displayed on a touchscreen 151 [FIG. 7 (a)]. Thereafter, a 2^{nd} webpage can be displayed in response to a link selection or a favorites (or bookmark) selection [FIG. 7 (b)]. If a page search is additionally performed 6 times, an 8^{th} webpage can be displayed [FIG. 7 (c)]. In doing so, if a hand manipulating mode is triggered, an operation in a watch type mobile terminal is described in detail with reference to FIG. 8 as follows.

FIG. 8 is a diagram for one example of a procedure for performing a hand manipulating mode in a watch type mobile terminal according to one embodiment of the present invention. In FIG. 8, each time a hand rotates by 180 degrees, assume that a process information is changed. And, assume that a screenshot image of each process is displayed as a process information.

Referring to FIG. 8 (a), as a hand manipulating mode is triggered, a hand 810, which is to be rotated by a touch input, is displayed through a touch input in a manner of facing a 12 o'clock direction on an analog watch 300. In doing so, a location of the hand may face other directions depending on default settings. And, a hand normally displayed on an analog watch can be additionally displayed as well as the hand manipulated by the touch input. Moreover, a summary information 820 on a process may be displayed. In this case, the summary information 820 may include an application information indicating a process of a prescribed application and a count information of the process, for example. Of course, more or less information may be further included in the summary information 820.

In doing so, referring to FIG. 8 (b), if the hand starts to rotate, a screenshot image 838 of an 8^{th} page corresponding to a most recently executed process can be displayed on a background. If the hand 810 continues to rotate to exceed 180 degrees in the initial direction, referring to FIG. 8 (c), a screenshot image 837 of a 7^{th} webpage can be displayed on the background.

Thereafter, as the hand 810 continues to rotate in the same direction, referring to FIG. 8 (d), while a screen shot image 831 of a default page (i.e.. a 1^{st} page) is displayed on the background, if the hand 810 is further rotated over 180 degrees in the same direction, it is able to display a popup message 840 indicating that no more process change is available due to an end of process. In doing so, an information on an application (e.g., a music play application) previously run before a web browser can be included in the popup message 840. While the popup message 840 is displayed, if the hand rotation continues, the state shown in FIG. 8 (a) is restored. As the hand keeps rotated, informations (e.g., a title, length and jacket image of a recently played music, etc.) on the process of the music play application can be sequentially displayed. In doing so, if a user inputs a touch-drag command to the hand 810 with a pointer in an external direction of the watch 300, a process corresponding to a currently displayed process information can be selected. Hence, the selected process can be paged and displayed on the touchscreen 151 of the mobile terminal 100. Of course, the touch-drag input in the external direction of the watch is exemplary. Besides, if the hand stays within an angle corresponding to a specific process over prescribed duration or there is a different type input such as an input of touching a region except the hand and the like, it is able to set the corresponding process to be selected.

On the other hand, if a hand is rotated in an opposite direction, process informations can be changed again from an oldest process to a latest process.

According to the example shown in FIG. 8, as the hand is rotated clockwise, the process is changed in order of time (recent → past). Yet, it is a matter of course that a process change in accordance with a rotation direction of the hand can be set in reverse order. It is not mandatory for numerals to be displayed to indicate hours of the analog watch. It is not mandatory for a single hand to be displayed only. A hand displayed to face the 12 o'clock direction initially in mode can be changed into a direction indicated as a default. Namely, while an analog watch keeps being displayed without any change, if a prescribed hand rotates after a mode trigger, it is apparent to those skilled in the art that a preview information on a process may be displayed in response to the hand rotation, that a single hand may be displayed on an analog watch displayed display after the mode trigger, or that an intermediate configuration between the two courses may be available.

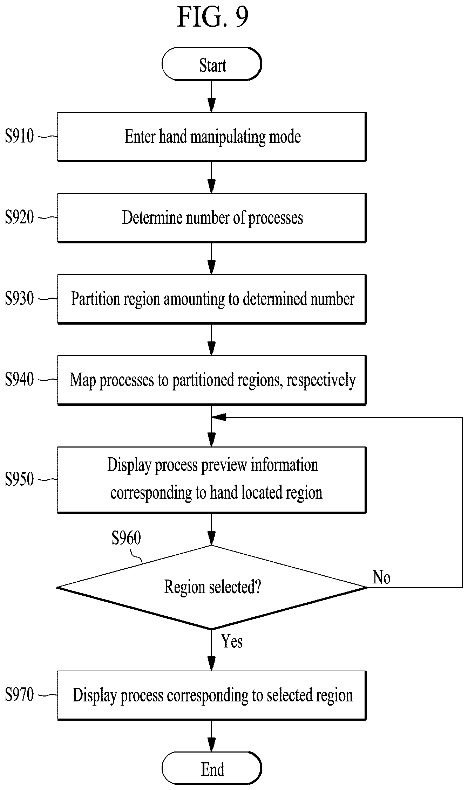

Meanwhile, according to one aspect of the present embodiment, in order for a user to intuitively watch the number of previously performed processes, a region of an analog watch displayed touchscreen is divided into sub-regions as many as the number of the processes and the corresponding processes can be then displayed in a manner of being mapped to the sub- regions, respectively. This is described in detail with reference to FIG. 9 as follows.

FIG. 9 is a flowchart for one example of a method for searching and paging a previously performed process through a region division of an analog type watch in a mobile terminal according to one embodiment of the present invention.

Referring to FIG. 9, as a preset condition is met, a hand manipulating mode can be entered [S910]. In this case, the preset condition may mean one of a menu selection corresponding to a hand manipulating mode, a wire/wireless signal reception from an external environment and the like. For example, a case of receiving a signal externally may include one of a case of detecting that the watch type mobile terminal 200 comes in contact with the mobile terminal 100, a case of detecting that the watch type mobile terminal 200 enters a range of a predetermined distance, a case of selecting a specific button from the watch type mobile terminal 200, and the like. Of course, before the hand manipulating mode is entered, it is preferable that an analog watch is displayed in advance on at least one mobile terminal involved in the implementation of the present invention.

Subsequently, the controller 180 determines the number of previously performed processes prior to the hand manipulating mode entry [S920]. In particular, a process currently performed by the mobile terminal may be included in or excluded from the previously performed process in accordance with necessity or settings. Moreover, in determining the number of processes, a unit and time of a process can be taken into consideration. For instance, in case that a target of a process count includes a menu/content performed on a currently running application, it is able to count the number of menus/contents run/displayed until the hand manipulating mode entry after running the corresponding application. For another instance, if a target of the process count is performed by an application unit, the count target may be limited to the number of applications performed during a prescribed unit time.

Once the number is determined, an internal region of the analog watch can be partitioned in a manner that an internal region of the currently displayed analog watch can correspond to the determined number of the processes [S930].

The processes are mapped to the partitioned regions, respectively [S940]. And, a preview information of the process corresponding to a region, in which a specific hand of the analog watch is located after movement, can be displayed [S950]. In this case, the preview information is the information for informing a user of a type or status of a process and may include one of a screenshot image on executing a corresponding process, a text/icon information and the like. In case that a schematic process identification information (e.g., a type of an application, a type of a menu/content, a title of an application, a title of a menu/content, etc.) is displayed as well in the step S940, an information further detailed than the identification information can be provided as the preview information in the step S950.

If one of the partitioned regions is selected [S960], the process corresponding to the selected region can be paged again [S970].

In the above procedure described with reference to FIG. 9, if an analog watch displayed device is identical to a process performed and paged device, all the steps can be performed within the corresponding device. On the contrary, if an analog watch displayed device is different from a process performed and paged device, the step S910 is simultaneously entered by the two devices. And, the step S920 is performed by the process performed and paged device. Subsequently, if the information on the process is delivered to the analog watch displayed device, the steps S930 to S960 can be performed in the analog watch displayed device. A result of the step S960 can be delivered to the process performed and paged device to perform the step S970 again.

Of course, in a manner similar to that of FIG. 5, in order to count the number of processes and provide information (i.e., schematic information and preview information) on the counted process, the controller 180 of the mobile terminal 100 can control information, which is required for the counting or the information providing each time a process is created/changed, to be saved in the memory 160.

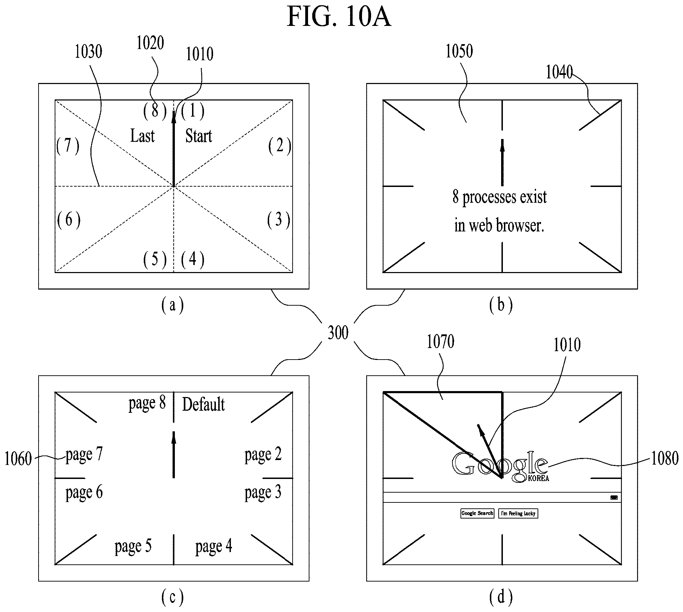

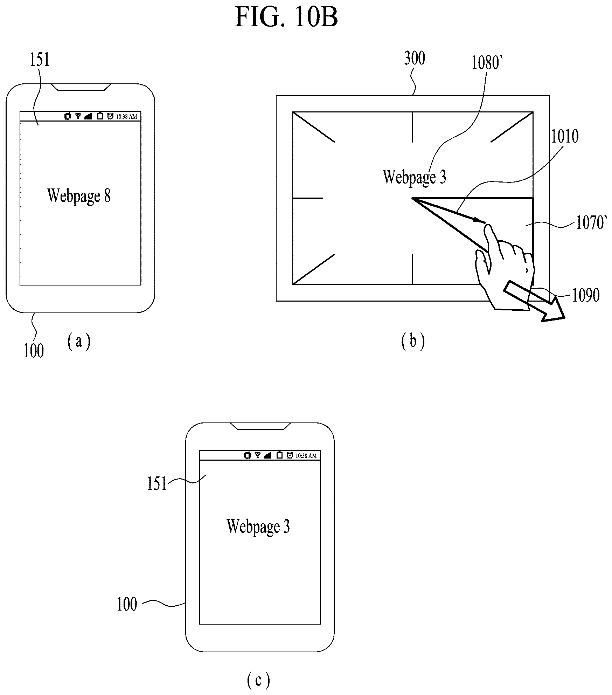

In the following description, in case that the hand manipulating mode is triggered by the method described with reference to FIG. 9, an operation in the watch type mobile terminal is explained in detail with reference to FIG. 10A and FIG. 10B. In FIG. 10A and FIG. 10B, assume a case that 8 processes are performed in the mobile terminal 100 in the order shown in FIG. 7.

FIG. 10A is a diagram for one example of a procedure for performing a hand manipulating mode in a watch type mobile terminal according to one embodiment of the present invention.

Referring to FIG. 10A, as a hand manipulating mode is triggered, process related information (e.g., number of processes, identification information, preview image, etc.) can be sent to the watch type mobile terminal 200 from the mobile terminal 100. In case that total 8 processes including 1^{st} to 8^{th} webpages are counted, referring to FIG. 10A (a), the previously displayed analog watch 300 is divided into 8 equal parts and the processes can be mapped to the corresponding regions, respectively. In doing so, a single watch hand 1010 can be displayed between two random regions (e.g., 12 o'clock direction). And, a region identification information 1020 and/or a boundary line 1030 may be displayed as well as the hand. On the other hand, referring to FIG. 10A (b), a boundary line 1040 in schematic shape and an information 1050 indicating the number of processes may be displayed together with the hand. Moreover, referring to FIG. 10A (c), a webpage information 1060 may be displayed as a text on each of the regions. Of course, the informations displayed in accordance with the division of the internal region of the analog watch are exemplary. And, it is a matter of course that more or less informations can be displayed in accordance with necessity or settings.

A location of the watch hand 1010 can be changed through a touch input. Referring to FIG. 10A (d), in case that the watch hand 1010 is moved to the region corresponding to the 8^{th} webpage, a visual effect 1070 can be displayed to represent the watch hand located region more clearly. And, a screenshot image 1080 of the 8^{th} webpage can be displayed in an internal space.

Thus, in the situation shown in one of FIGs. 10A (a) to 10A (c), a user can schematically recognize each process. If a watch hand is moved in a manner shown in FIG. 10A (d), the user can obtain further detailed information on a process corresponding to a location of the watch hand.

A case of selecting a specific region is described with reference to FIG. 10B as follows.

FIG. 10B is a diagram for one example of a process paging method in response to a selection of a region corresponding to a specific process in a mobile terminal according to one embodiment of the present invention.

Referring to FIG. 10B (a), while a hand manipulating mode is performed on analog watch 300 displayed on the watch type mobile terminal 200, a last displayed screen (i.e., a display of an 8^{th} webpage) can continue to be displayed on the mobile terminal 100 without any changes. In this situation, referring to FIG. 10B (b), if a hand 1010 is moved to a region corresponding to a 3^{rd} webpage on the analog watch 300, a visual effect 1070' can be displayed to visually identify the corresponding region and a screenshot image 1080' of the 3^{rd} webpage can be displayed within the watch. In doing so, if a user inputs a touch-drag command in an external watch direction to the hand 1010 using a pointer 1090, a process (i.e., 3^{rd} webpage) corresponding to a region, at which the hand currently stays, can be selected. Hence, referring to FIG. 10B (c), the 3^{rd} webpage can be paged and displayed on the touchscreen 151 of the mobile terminal 100. The touch-drag input in the external watch direction is exemplary. The corresponding region can be set to be selected if an input of a different type (e.g., a case that the hand stays in a specific region over prescribed duration, a case that a hand staying region is touched, etc.) is applied.

Meanwhile, FIG. 10B (a) shows that no changes occur in the mobile terminal 100 in the course of selecting a process in the watch type mobile terminal 100. Yet, the corresponding process can be paged and displayed temporarily by real time in response to a movement of the hand.

And, it is a matter of course that the change occurring on the touchscreen of the mobile terminal in accordance with a progress of the hand manipulating mode shown in FIG. 10B is applicable to FIG. 8.

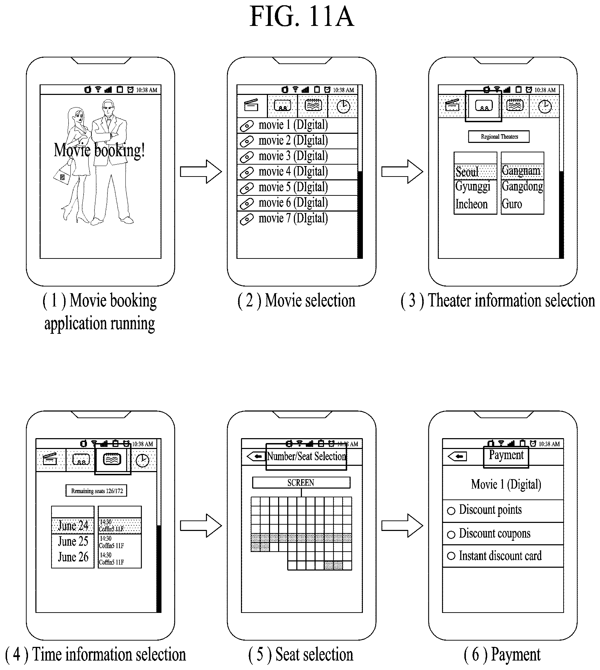

In the following description, the hand manipulating mode described with reference to FIG. 10A and FIG. 10B is further described in detail through a detailed example with reference to FIGs. 11A to 12. FIGs. 11A to 12 show one example of a procedure for returning to a theater selecting step through a hand manipulating mode if a user intends to change a theater in a payment step in the course of booking tickets through a move booking application.

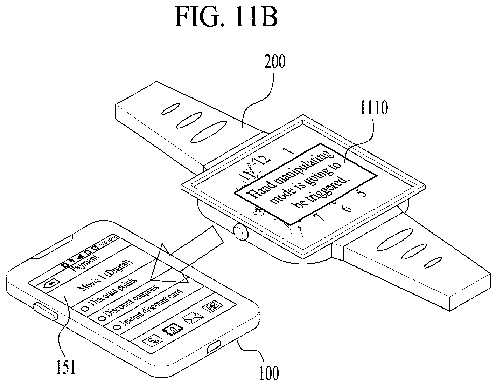

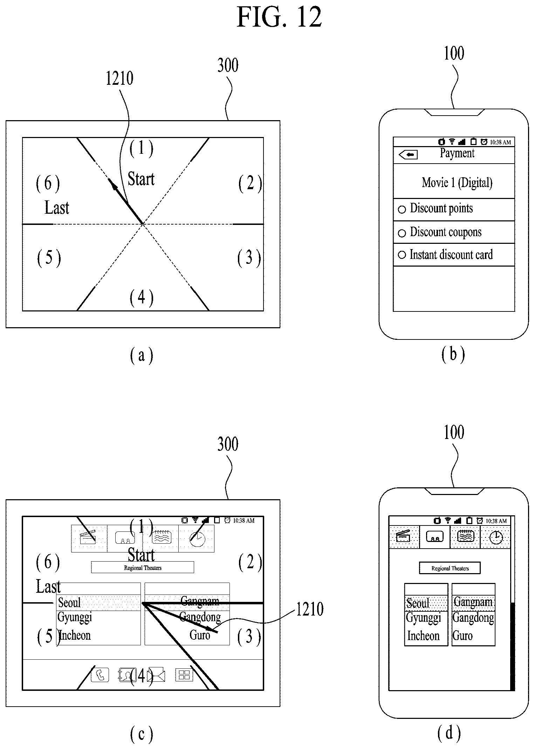

FIG. 11A is a diagram for one example of a process proceeding procedure in a mobile terminal according to one embodiment of the present invention. FIG. 11B is a diagram for one example of a configuration that a hand manipulating mode is triggered in response to a tag to a watch type mobile terminal in a mobile terminal according to one embodiment of the present invention. FIG. 12 is a diagram for one example of a paging procedure in accordance with a process selection in a mobile terminal according to one embodiment of the present invention;

FIGs. 11A to 12 show one example of performing a hand manipulating mode in a mobile terminal and a watch type mobile terminal according to one embodiment of the present invention.

Referring to FIG. 11A, as a moving booking application is run, total 6 processes for displaying menus of an initial screen (1), a movie selection (2), a theater information selection (3), a show time selection (4), a seat selection (5) and a payment (6) can proceed in order.

In this situation, referring to FIG. 11B, if a watch type mobile terminal 200 comes in contact with a mobile terminal 100 through NFC tag, a popup window 1110 can be displayed on the watch type mobile terminal 200 to indicate that a hand manipulating mode is triggered.

Hence, a region of an analog watch 300 is divided into 6 regions and a watch hand 1210 can be displayed between a 1^{st} process and a 6^{th} process. In doing so, referring to FIG. 12 (b), a last displayed payment menu can continue to be displayed on the mobile terminal 100. In doing so, referring to FIG. 12 (c), if the user moves the watch hand 1210 to a 3^{rd} region to change a theater, a preview image of a theater information selection menu can be displayed within the analog watch. Thereafter, referring to FIG. 12 (d), if the 3^{rd} region is selected by one of the aforementioned methods, the theater information selection menu can be paged on the mobile terminal 100.

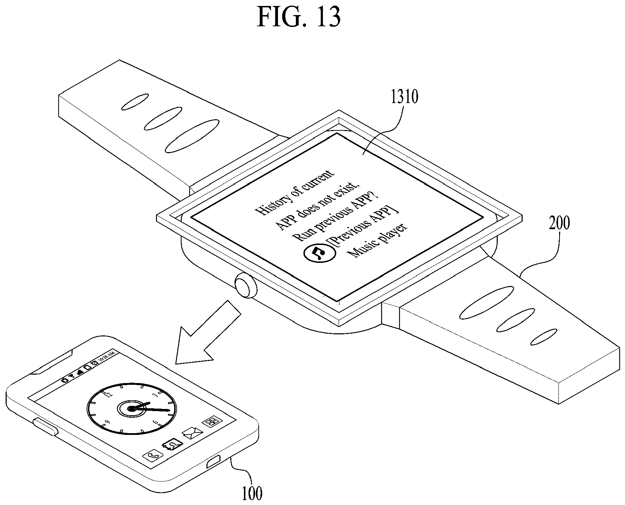

Meanwhile, while a currently running application is not present or a single process exists, a hand manipulating mode can be triggered. Such a case is described in detail with reference to FIG. 13 as follows.

FIG. 13 is a diagram for one example of an operation in case that a hand manipulation mode is unable to be triggered in a watch type mobile terminal according to one embodiment of the present invention.

Referring to FIG. 13, as a web browser is executed in the mobile terminal 100, while a default page is displayed only, the mobile terminal 100 may come in contact with the watch type mobile terminal 200. Since a single process exists only, the controller 180 of the mobile terminal 100 can inform the watch type mobile terminal 200 that it is unable to trigger the hand manipulating mode. In doing so, if there exists a previously run application having a plurality of processes exist therein, the controller 180 can send an information on the existence of the previously run application to the watch type mobile terminal 200 as well. In this case, a message notifying that the triggering is impossible and a hand manipulating mode executable application information 1310 can be displayed on the watch type mobile terminal 200.

### Process Search & Page per Time through Hand Manipulation of Analog Watch

According to another embodiment of the present invention, a method of checking and paging processes run between a present time and a past time corresponding to a moved hand by moving a prescribed hand of an analog watch counterclockwise is provided.

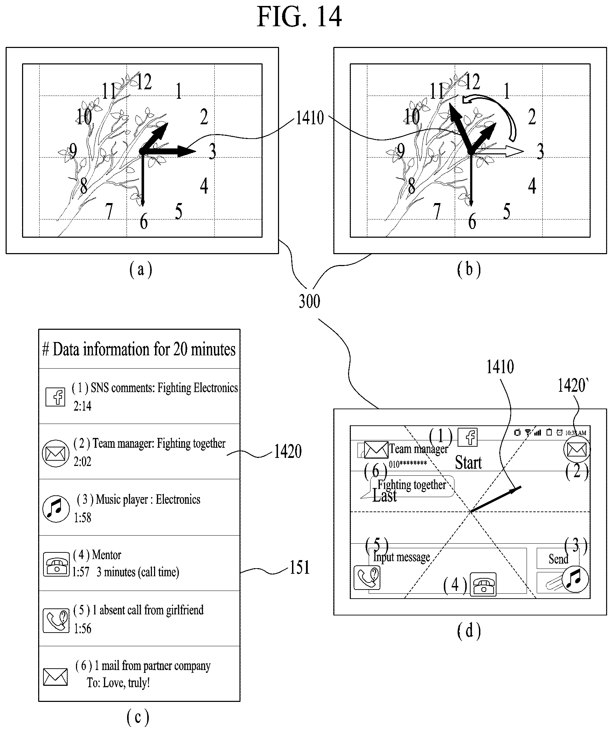

FIG. 14 is a diagram for one example of a procedure for confirming and paging a process in accordance with a time change through an analog watch in a mobile terminal according to another embodiment of the present invention.

Referring to FIG. 14 (a), a minute hand 1410 of an analog watch 300 currently indicates a position '15 minutes'. If a user's touch input is applied, referring to FIG. 14 (b), the minute hand 1410 can be moved to a position '55 minutes' from the position '15 minutes' counterclockwise.

If so, a hand manipulating mode according to another embodiment of the present invention can be triggered. If 6 processes have been run for the past 20 minutes in the mobile terminal 100 [FIG. 14 (b)], an internal region of the analog watch 300 can be partitioned into 6 regions [FIG. 14 (d). The processes shown in FIG. 14 (c) are mapped to the partitioned regions per time, respectively. And, an identification information on each of the mapped processes can be displayed. For instance, a message reception event 1420 second recently occurring in FIG. 14 (c) can be identified using a message icon 1420' on a 2^{nd} region shown in FIG. 14 (d). After completion of the space partition and process mapping of the analog watch, if a location of the hand 1410 is changed in response to a user's touch input, a screenshot image of the process corresponding to the changed location can be displayed within the watch. In doing so, if a region, in which the hand 1410 is located, is selected by one of the aforementioned methods, the process corresponding to the selected region can be paged and displayed on the mobile terminal 100. Since a configuration of the region partition shown FIG. 14 (d) and the types of the informations displayed on the respective regions can be modified in a manner similar to that mentioned in the foregoing description of one embodiment of the present invention, redundant descriptions shall be omitted from the following description for clarity. Moreover, a list of the processes shown in FIG. 14 (c) may be displayed on the touchscreen 151 of the mobile terminal 100 in the course of the triggered hand manipulating mode, or may not.

If the analog watch 300 is currently displayed on the watch type mobile terminal 200 connected to the mobile terminal 100 in the course of the above-mentioned procedure, a controller of the watch type mobile terminal 200 can control information on the minute hand moved timing point to be sent to the mobile terminal 100. Having obtained the timing point information, the controller 180 of the mobile terminal 100 can send the information (e.g., identification information, preview information, etc.) on the process previously run during the corresponding time to the watch type mobile terminal 200 again. Moreover, the watch type mobile terminal 200 can send information on the selected region to the mobile terminal 100 so that the process corresponding to the selected region can be paged in the mobile terminal 100.

As mentioned in the foregoing description with reference to FIG. 5 and FIG. 8, the above-mentioned function can be implemented by a method of changing a process in response to a rotation angle as well as by the region portioning method. For instance, as a minute hand rotates counterclockwise, if a hand manipulating mode is triggered, a hand is displayed in the first place with region partition. As the hand is rotated, information on a most recently performed process within the corresponding time range can be displayed. Thereafter, each time the rotation angle of the hand excess a predetermined angle, information on another process within the corresponding time range can be sequentially displayed.

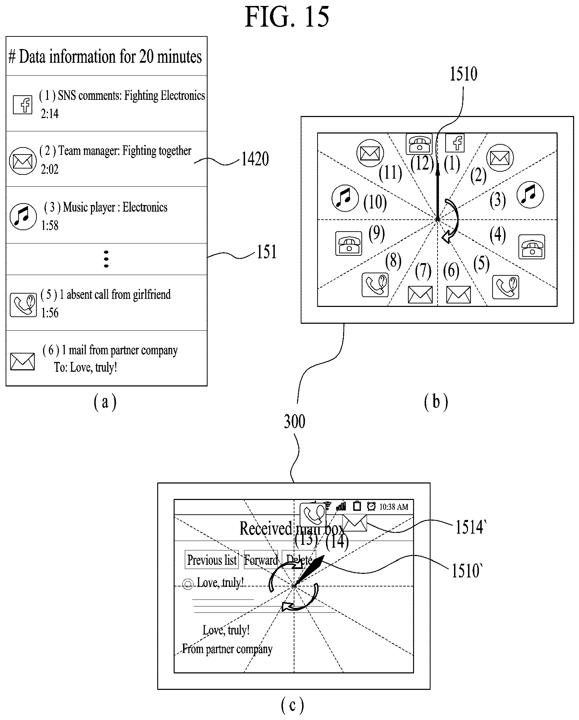

Meanwhile, if there exist processes of which number exceeds a predetermined number during a minute hand moved time, an internal region of an analog watch may be partitioned into too many regions excessive to its size. In this case, it may be difficult for a user to select a user-desired process accurately through a movement of a hand. A solution for this case shall be described in detail with reference to FIG. 15 as follows.

FIG. 15 is a diagram for one example of a configuration that a hand manipulating mode is performed if a predetermined number of processes or more exist in an interval selected by a minute hand in a mobile terminal according to another embodiment of the present invention. In FIG. 15, assume a case that a minute hand is moved back to 20 minutes in a manner similar to that shown in FIG. 14. And, assume that an internal region of a watch is possibly partitioned into maximum 12 regions.

Referring to FIG. 15, when 14 processes are run for past 20 minutes [FIG. 15 (a)], if a hand manipulating mode is triggered, an internal region of an analog watch 300 is partitioned into 12 regions so that only 12 events can displayed by being mapped to the corresponding spaces in order of event occurrence time closer to a current time [FIG. 15 (b)]. In doing so, if a user rotates a watch hand 1510 over 360 degrees clockwise, the remaining 2 processes can be displayed on the 1^{st} region and the 2^{nd} region in clockwise order, respectively. In doing so, in order to indicate 360-degree rotation, a shape of the watch hand can be changed into a new shape 1510'. If the hand is moved counterclockwise again, it is able to return to the status shown in FIG. 15 (b). In the status shown in FIG. 15 (c), an identification information (e.g., an application icon 1514' corresponding to a last process 1514) of each region can be displayed. In case that the hand 1510' stays in the region corresponding to the last process 1514, a screenshot image of the corresponding process can be displayed within the watch.

The processes shown in FIG. 14 (c) are mapped to the partitioned regions per time, respectively. And, an identification on each of the mapped processes can be displayed. For instance, a message reception even 1420, which has occurred second recently in FIG. 14 (c), can be identified with a message icon 1420' on the 2^{nd} region shown in FIG. 14 (d).

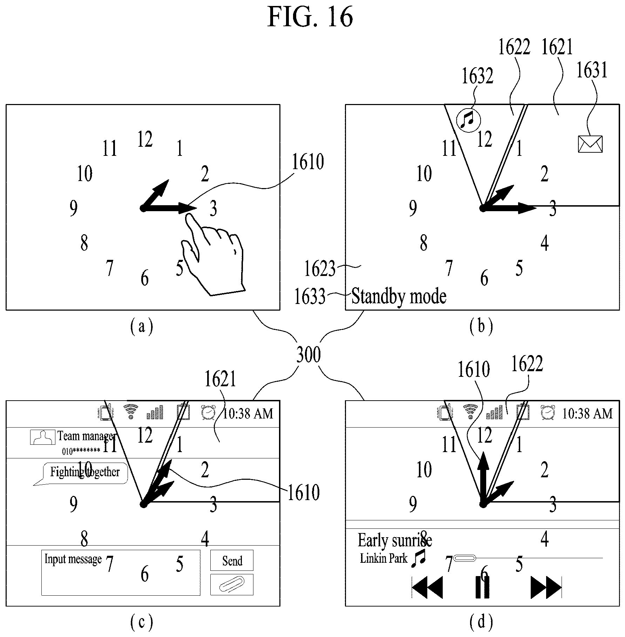

Meanwhile, according to another embodiment of the present invention, a process having run during a predetermined time unit can be displayed on an analog watch in a manner of corresponding to a running time. This is described in detail with reference to FIG. 16 as follows.

FIG. 16 is a diagram for one example of a configuration that a hand manipulating mode is performed in a mobile terminal according to further embodiment of the present invention.

Referring to FIG. 16 (a), as a minute hand of an analog watch is selected through a long touch input, a hand manipulating mode according to another embodiment of the present invention can be triggered. Hence, an internal space of the watch is partitioned to correspond to each process run in a predetermined time (e.g., 1 hour, etc.) and an information on the each process can be displayed. For instance, referring to FIG. 16 (b), a message application was run until about 10 minutes ago and a music play application was run until about 20 minutes ago. If a mobile terminal operates in standby mode ahead of about 20 minutes, an internal region of the watch can be partitioned into 3 regions. A message icon 1631 can be displayed on a 1^{st} region 1621 closest to a current time. A music icon 1632 can be displayed on a 2^{nd} region 1622 second closest to the current time. And, a text 1633 indicating the standby mode can be displayed on a 3^{rd} region 1623.

In doing so, referring to FIG. 16 (c), if a minute hand 1610 is moved to the 1^{st} region 1621, a screenshot image of a message application can be displayed within the watch. If the minute hand 1610 is moved to the 2^{nd} region 1622, a screenshot image of a music play application can be displayed within the watch. Of course, if a hand located region is selected by one of the methods according to one embodiment of the present invention, a process corresponding to the selected region can be paged in the mobile terminal.

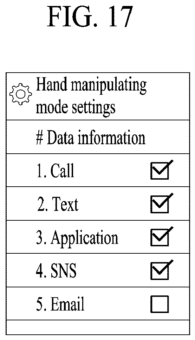

FIG. 17 is a diagram for one example of a menu configuration for selecting a target application, which is to be counted as a process in a hand manipulating mode, according to embodiments of the present invention.

Referring to FIG. 17, a target application, which is to be counted as a process in hand manipulating mode, is set through a menu screen in advance. And, an execution of an unset application may be set not to be counted as a process according to the present invention.

It will be apparent to those skilled in the art that various modifications and variations can be specified into other form(s) without departing from the scope of the inventions.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the scope of the inventions. Thus, it is intended that the present invention covers the modifications and variations of this invention provided they come within the scope of the appended claims only.

## Claims

1. A watch-type mobile terminal (200) comprising:
a touchscreen configured to display an analog watch type interface including a hand (810) that is rotatable in response to a user input (S510);
a wireless communication unit configured to communicate with an external mobile terminal (100); and
a controller **characterized in that** the controller is configured to:
cause the wireless communication unit to receive first information from the external mobile terminal (100) when a preset condition is met, wherein the received first information is related to at least one process previously executed in the external mobile terminal (S520);
cause the touchscreen (251) to display second information (838) associated with a specific one of the at least one previously executed process in response to a touch input causing rotation of the hand (810) on the touchscreen (251), the displayed second information corresponding to a rotation angle of the rotated hand (S530); and
cause the wireless communication unit to transmit third information related to the second information to the external mobile terminal (S550) in response to selection of the displayed second information (S540) such that the specific one of the at least one previously executed process is paged in the external mobile terminal (100).

2. The watch-type mobile terminal (200) of claim 1, wherein:
the specific process is a first process among the at least one previously executed processes when the rotation angle is a first angle; and
the specific process is associated with a second process among the at least one previously executed processes when the rotation angle is a second angle.

3. The watch-type mobile terminal (200) of any one of the preceding claims, wherein the controller is further configured to:
divide the touchscreen (251) into a plurality of regions such that a number of the plurality of regions corresponds to a number of the at least one previously executed processes (S930), each of the plurality of regions corresponding to a specific process of the at least one previously executed processes (S940); and
cause the touchscreen (251) to display a preview image of the corresponding specific process when the hand is positioned at a specific one of the plurality of regions (S950).

4. The watch-type mobile terminal (200) of claim 3, wherein the preview image is received from the external mobile terminal (100) and comprises a screenshot image corresponding to the corresponding specific process.

5. The watch-type mobile terminal (200) of any one of the preceding claims, wherein the preset condition comprises at least:
a first condition when the watch-type mobile terminal (200) is located within a predetermined distance from the external mobile terminal (100);
a second condition when a specific menu icon is selected at the watch-type mobile terminal (200) or the external mobile terminal (100); or
a third condition when a specific key button of the watch-type mobile terminal (200) is selected.

6. The watch-type mobile terminal (200) of any one of the preceding claims, wherein the at least one previously executed process comprises:
a plurality of applications previously executed in the external mobile terminal (100);
a plurality of menus previously accessed during execution of an application in the external mobile terminal (100); or
a plurality of contents previously output during execution of an application in the external mobile terminal (100).

7. A method of controlling an external mobile terminal (100) communicating with a watch-type mobile terminal (200), the method performed at the watch-type mobile terminal (200) comprises:
displaying an analog watch type interface, including a hand (810) that is rotatable in response to a user input, on a touchscreen (251) of the watch-type mobile terminal (S510); **characterized in that**, the method further comprises:
receiving first information from the external mobile terminal (100) when a preset condition is met, wherein the received first information is related to at least one process previously executed in the external mobile terminal (S520);
displaying second information (838) associated with a specific one of the at least one previously executed processes in response to a touch input causing rotation of the hand on the touchscreen, the displayed second information corresponding to a rotation angle of the rotated hand (S530); and
transmitting third information related to the second information to the external mobile terminal in response to selection (S540) of the displayed second information such that the specific one of the at least one previously executed processes is paged in the external mobile terminal (S550).

8. The method of claim 7, wherein:
the specific process is a first process among the at least one previously executed processes when the rotation angle is a first angle; and
the specific process is a second process among the at least one previously executed processes when the rotation angle is a second angle.

9. The method of any one of the preceding claims, further comprising:
dividing the touchscreen (251) into a plurality of regions such that a number of the plurality of regions corresponds to a number of the at least one previously executed processes (S930), each of the plurality of regions corresponding to a specific process of the at least one previously executed processes (S940); and
displaying a preview image of the corresponding specific process when the hand is positioned at a specific one of the plurality of regions (S950).

10. The method of claim 9, further comprising receiving the preview image from the external mobile terminal, wherein the preview image comprises a screenshot image corresponding to the corresponding specific process.

11. The method of any one of the preceding claims, wherein the preset condition comprises at least:
a first condition when the watch-type mobile terminal (200) is located within a predetermined distance from the external mobile terminal (100);
a second condition when a specific menu icon is selected at the watch-type mobile terminal (200) or the external mobile terminal (100); or
a third condition when a specific key button of the watch-type mobile terminal (200) is selected.

12. The method of any one of the preceding claims, wherein the at least one previously executed process comprises:
a plurality of applications previously executed in the external mobile terminal;
a plurality of menus previously accessed during execution of an application in the external mobile terminal; or
a plurality of contents previously output during execution of an application in the external mobile terminal.

13. The method any one of the preceding claims, wherein:
the at least one previously executed process comprises a plurality of web pages accessed in a web browser executed at the external mobile terminal such that one of the plurality of web pages is selectable by the rotation of the hand;
the method further comprises displaying a number of the plurality of web pages; and
the second information comprises information associated with one of the plurality of web pages.

14. The method of claim 13, further comprising displaying information related to a next application that is not the web browser when the hand is rotated more than a threshold angle.

## Patentansprüche

1. Mobiles Endgerät (200) des Uhrentyps, mit:
einem Touchscreen, der dafür konfiguriert ist, eine Schnittstelle eines analogen Uhrentyps mit einem Zeiger (810) anzuzeigen, der in Antwort auf eine Benutzereingabe drehbar ist (S510);
einer Drahtloskommunikationseinheit, die dafür konfiguriert ist, mit einem externen mobilen Endgerät (100) zu kommunizieren; und
einer Steuereinheit,
**dadurch gekennzeichnet, dass** die Steuereinheit dafür konfiguriert ist:
zu veranlassen, dass die Drahtloskommunikationseinheit erste Information vom externen mobilen Endgerät (100) empfängt, wenn eine voreingestellte Bedingung erfüllt ist, wobei die empfangene erste Information mit mindestens einem Prozess in Beziehung steht, der zuvor im externen mobilen Endgerät ausgeführt wurde (S520);
zu veranlassen, dass der Touchscreen (251) in Antwort auf eine Berührungseingabe, die eine Drehbewegung des Zeigers (810) auf dem Touchscreen (251) verursacht, zweite Information (838) anzeigt, die einem spezifischen unter dem mindestens einen zuvor ausgeführten Prozess zugeordnet ist, wobei die angezeigte zweite Information einem Drehwinkel des gedrehten Zeigers entspricht (S530); und
zu veranlassen, dass die Drahtloskommunikationseinheit dritte Information, die mit der zweiten Information in Beziehung steht, in Antwort auf die Auswahl der angezeigten zweiten Information (S540) an das externe mobile Endgerät überträgt (S550), so dass der eine spezifische unter dem mindestens einen zuvor ausgeführten Prozess im externen mobilen Endgerät (100) aufgerufen wird.

2. Mobiles Endgerät (200) nach Anspruch 1, wobei:
der spezifische Prozess ein erster Prozess unter dem mindestens einen zuvor ausgeführten Prozess ist, wenn der Drehwinkel ein erster Winkel ist; und
der spezifische Prozess einem zweiten Prozess unter dem mindestens einen zuvor ausgeführten Prozesse zugeordnet ist, wenn der Drehwinkel ein zweiter Winkel ist.

3. Mobiles Endgerät (200) nach einem der vorangehenden Ansprüche, wobei die Steuereinheit ferner dafür konfiguriert ist:
den Touchscreen (251) in mehrere Bereiche derart zu teilen, dass eine Anzahl der mehreren Bereiche einer Anzahl des mindestens einen zuvor ausgeführten Prozesses entspricht (S930), wobei jeder der mehreren Bereiche einem spezifischen Prozess unter dem mindestens einen zuvor ausgeführten Prozess entspricht (S940); und
zu veranlassen, dass der Touchscreen (251) ein Vorschaubild des entsprechenden spezifischen Prozesses anzeigt, wenn der Zeiger in einem spezifischen Bereich der mehreren Bereiche angeordnet ist (S950).

4. Mobiles Endgerät (200) nach Anspruch 3, wobei das Vorschaubild von dem externen mobilen Endgerät (100) empfangen wird und ein Screenshot-Bild aufweist, das dem entsprechenden spezifischen Prozess entspricht.

5. Mobiles Endgerät (200) nach einem der vorangehenden Ansprüche, wobei die voreingestellte Bedingung mindestens aufweist:
eine erste Bedingung, wenn sich das mobile Endgerät (200) des Uhrentyps in einem vorgegebenen Abstand vom externen mobilen Endgerät (100) befindet;
eine zweite Bedingung, wenn ein spezifisches Menüsymbol am mobilen Endgerät (200) des Uhrentyps oder am externen mobilen Endgerät (100) ausgewählt wird; oder
eine dritte Bedingung, wenn ein spezifischer Tastenknopf des mobilen Endgeräts (200) des Uhrentyps ausgewählt wird.

6. Mobiles Endgerät (200) nach einem der vorhergehenden Ansprüche, wobei der mindestens eine zuvor ausgeführte Prozess aufweist:
mehrere Anwendungen, die zuvor im externen mobilen Endgerät (100) ausgeführt wurden;
mehrere Menüs, auf die zuvor während der Ausführung einer Anwendung im externen mobilen Endgerät (100) zugegriffen wurde; oder
mehrere Inhalte, die zuvor während der Ausführung einer Anwendung im externen mobilen Endgerät (100) ausgegeben wurden.

7. Verfahren zum Steuern eines externen mobilen Endgeräts (100), das mit einem mobilen Endgerät (200) des Uhrentyps kommuniziert, wobei das im mobilen Endgerät (200 des Uhrentyps ausgeführte Verfahren die Schritte aufweist:
Anzeigen von zweiter Information (838), die einem spezifischen unter dem mindestens einen zuvor ausgeführten Prozess zugeordnet ist, in Antwort auf eine Berührungseingabe, die eine Drehbewegung des Zeigers verursacht, auf dem Touchscreen, wobei die angezeigte zweite Information einem Drehwinkel des gedrehten Zeigers entspricht (S530) ; und
Übertragen dritter Information, die mit der zweiten Information in Beziehung steht, an das externe mobile Endgerät in Antwort auf die Auswahl (S540) der angezeigten zweiten Information, so dass der eine spezifische unter dem mindestens einen zuvor ausgeführten Prozess im externen mobilen Endgerät aufgerufen wird (S550).

8. Verfahren nach Anspruch 7, wobei:
der spezifische Prozess ein erster Prozess unter den mindestens einen zuvor ausgeführten Prozess ist, wenn der Drehwinkel ein erster Winkel ist; und
der spezifische Prozess ein zweiter Prozess unter den mindestens einen zuvor ausgeführten Prozess ist, wenn der Drehwinkel ein zweiter Winkel ist.

9. Verfahren nach einem der vorhergehenden Ansprüche, ferner mit den Schritten:
Teilen des Touchscreens (251) in mehrere Bereiche derart, dass eine Anzahl der mehreren Bereiche einer Anzahl des mindestens einen zuvor ausgeführten Prozesses entspricht (S930),
wobei jeder der mehreren Bereiche einem spezifischen Prozess unter dem mindestens einen zuvor ausgeführten Prozess entspricht (S940); und
Anzeigen eines Vorschaubildes des entsprechenden spezifischen Prozesses, wenn der Zeiger in einem spezifischen Bereich der mehreren Bereiche angeordnet ist (S950).

10. Verfahren nach Anspruch 9, ferner mit dem Empfangen des Vorschaubilds vom externen mobilen Endgerät, wobei das Vorschaubild ein Screenshot-Bild aufweist, das dem entsprechenden spezifischen Prozess entspricht.

11. Verfahren nach einem der vorangehenden Ansprüche, wobei die voreingestellte Bedingung mindestens aufweist:
eine erste Bedingung, wenn sich das mobile Endgerät (200) des Uhrentyps in einem vorgegebenen Abstand vom externen mobilen Endgerät (100) befindet;
eine zweite Bedingung, wenn ein bestimmtes Menüsymbol am mobilen Endgerät (200) des Uhrentyps oder am externen mobilen Endgerät (100) ausgewählt wird; oder
eine dritte Bedingung, wenn ein spezifischer Tastenknopf des mobilen Endgeräts (200) des Uhrentyps ausgewählt wird.

12. Verfahren nach einem der vorangehenden Ansprüche, wobei der mindestens eine zuvor ausgeführte Prozess aufweist:
mehrere Anwendungen, die zuvor im externen mobilen Endgerät ausgeführt wurden;
mehrere Menüs, auf die zuvor während der Ausführung einer Anwendung im externen mobilen Endgerät zugegriffen wurde; oder
mehrere Inhalte, die zuvor während der Ausführung einer Anwendung im externen mobilen Endgerät ausgegeben wurden.

13. Verfahren nach einem der vorangehenden Ansprüche, wobei:
der mindestens eine zuvor ausgeführte Prozess mehrere Web seiten aufweist, auf die in einem am externen mobilen Endgerät ausgeführten Webbrowser zugegriffen wird, so dass eine der mehreren Webseiten durch Drehen des Zeigers auswählbar ist,
das Verfahren ferner das Anzeigen mehrerer Web seiten aufweist, und
die zweite Information Information aufweist, die einer der mehreren Web seiten zugeordnet ist.

14. Verfahren nach Anspruch 13, ferner mit dem Anzeigen von Information, die mit einer nächsten Anwendung in Beziehung steht, die nicht der Webbrowser ist, wenn der Zeiger um mehr als einen Winkelschwellenwert gedreht wird.

## Revendications

1. Terminal mobile de type montre (200) comprenant :
un écran tactile configuré pour afficher une interface de type montre analogique incluant une aiguille (810) qui est rotative en réponse à une entrée d'utilisateur (S510) ;
une unité de communication sans fil configurée pour communiquer avec un terminal mobile externe (100) ; et
un organe de commande, **caractérisé en ce que** l'organe de commande est configuré pour :
amener l'unité de communication sans fil à recevoir des premières informations en provenance du terminal mobile externe (100) lorsqu'une condition préréglée est remplie, dans lequel les premières informations reçues sont relatives à au moins un processus précédemment exécuté dans le terminal mobile externe (S520) ;
amener l'écran tactile (251) à afficher des deuxièmes informations (838) associées à l'un spécifique de l'au moins un processus précédemment exécuté en réponse à une entrée tactile provoquant une rotation de l'aiguille (810) sur l'écran tactile (251), les deuxièmes informations affichées correspondant à un angle de rotation de l'aiguille tournée (S530) ; et
amener l'unité de communication sans fil à transmettre des troisièmes informations relatives aux deuxièmes informations à destination du terminal mobile externe (S550) en réponse à une sélection des deuxièmes informations affichées (S540) de sorte que l'un spécifique de l'au moins un processus précédemment exécuté soit appelé dans le terminal mobile externe (100).

2. Terminal mobile de type montre (200) selon la revendication 1, dans lequel :
le processus spécifique est un premier processus parmi l'au moins un processus précédemment exécuté lorsque l'angle de rotation est un premier angle ; et
le processus spécifique est associé à un deuxième processus parmi l'au moins un processus précédemment exécuté lorsque l'angle de rotation est un deuxième angle.

3. Terminal mobile de type montre (200) selon l'une quelconque des revendications précédentes, dans lequel
l'organe de commande est en outre configuré pour :
diviser l'écran tactile (251) en une pluralité de régions de sorte qu'un nombre de la pluralité de régions corresponde à un nombre de l'au moins un processus précédemment exécuté (S930), chacune de la pluralité de régions correspondant à un processus spécifique de l'au moins un processus précédemment exécuté (S940) ; et
amener l'écran tactile (251) à afficher une image de prévisualisation du processus spécifique correspondant lorsque l'aiguille est positionnée à l'une spécifique de la pluralité de régions (S950).

4. Terminal mobile de type montre (200) selon la revendication 3, dans lequel l'image de prévisualisation est reçue en provenance du terminal mobile externe (100) et comprend une image de capture d'écran correspondant au processus spécifique correspondant.

5. Terminal mobile de type montre (200) selon l'une quelconque des revendications précédentes, dans lequel
la condition préréglée comprend au moins l'une de :
une première condition lorsque le terminal mobile de type montre (200) est situé à au plus une distance prédéterminée du terminal mobile externe (100) ;
une deuxième condition lorsqu'une icône de menu spécifique est sélectionnée au terminal mobile de type montre (200) ou au terminal mobile externe (100) ; ou
une troisième condition lorsqu'un bouton de touche spécifique du terminal mobile de type montre (200) est sélectionné.

6. Terminal mobile de type montre (200) selon l'une quelconque des revendications précédentes, dans lequel l'au moins un processus précédemment exécuté comprend :
une pluralité d'applications précédemment exécutées dans le terminal mobile externe (100) ;
une pluralité de menus précédemment consultés au cours d'une exécution d'une application dans le terminal mobile externe (100) ; ou
une pluralité de contenus précédemment délivrés au cours d'une exécution d'une application dans le terminal mobile externe (100).

7. Procédé de commande d'un terminal mobile externe (100) communiquant avec un terminal mobile de type montre (200), le procédé effectué au terminal mobile de type montre (200) comprenant :
l'affichage d'une interface de type montre analogique incluant une aiguille (810) qui est rotative en réponse à une entrée d'utilisateur, sur un écran tactile (251) du terminal mobile de type montre (S510) ;
**caractérisé en ce que** le procédé comprend en outre :
la réception de premières informations en provenance du terminal mobile externe (100) lorsqu'une condition préréglée est remplie, dans lequel les premières informations reçues sont relatives à au moins un processus précédemment exécuté dans le terminal mobile externe (S520) ;
l'affichage de deuxièmes informations (838) associées à l'un spécifique de l'au moins un processus précédemment exécuté en réponse à une entrée tactile provoquant une rotation de l'aiguille sur l'écran tactile, les deuxièmes informations affichées correspondant à un angle de rotation de l'aiguille tournée (S530) ; et
la transmission de troisièmes informations relatives aux deuxièmes informations à destination du terminal mobile externe en réponse à une sélection (S540) des deuxièmes informations affichées de sorte que l'un spécifique de l'au moins un processus précédemment exécuté soit appelé dans le terminal mobile externe (S550).

8. Procédé selon la revendication 7, dans lequel :
le processus spécifique est un premier processus parmi l'au moins un processus précédemment exécuté lorsque l'angle de rotation est un premier angle ; et
le processus spécifique est un deuxième processus parmi l'au moins un processus précédemment exécuté lorsque l'angle de rotation est un deuxième angle.

9. Procédé selon l'une quelconque des revendications précédentes, comprenant en outre :
la division de l'écran tactile (251) en une pluralité de régions de sorte qu'un nombre de la pluralité de régions corresponde à un nombre de l'au moins un processus précédemment exécuté (S930), chacune de la pluralité de régions correspondant à un processus spécifique de l'au moins un processus précédemment exécuté (S940) ; et
l'affichage d'une image de prévisualisation du processus spécifique correspondant lorsque l'aiguille est positionnée à l'une spécifique de la pluralité de régions (S950).

10. Procédé selon la revendication 9, comprenant en outre la réception de l'image de prévisualisation en provenance du terminal mobile externe, dans lequel l'image de prévisualisation comprend une image de capture d'écran correspondant au processus spécifique correspondant.

11. Procédé selon l'une quelconque des revendications précédentes, dans lequel la condition préréglée comprend au moins l'une de :
une première condition lorsque le terminal mobile de type montre (200) est situé à au plus une distance prédéterminée du terminal mobile externe (100) ;
une deuxième condition lorsqu'une icône de menu spécifique est sélectionnée au terminal mobile de type montre (200) ou au terminal mobile externe (100) ; ou
une troisième condition lorsqu'un bouton de touche spécifique du terminal mobile de type montre (200) est sélectionné.

12. Procédé selon l'une quelconque des revendications précédentes, dans lequel l'au moins un processus précédemment exécuté comprend :
une pluralité d'applications précédemment exécutées dans le terminal mobile externe ;
une pluralité de menus précédemment consultés au cours d'une exécution d'une application dans le terminal mobile externe ; ou
une pluralité de contenus précédemment délivrés au cours d'une exécution d'une application dans le terminal mobile externe.

13. Procédé selon l'une quelconque des revendications précédentes, dans lequel :
l'au moins un processus précédemment exécuté comprend une pluralité de pages Web consultées dans un navigateur Web exécuté au terminal mobile externe de sorte que l'une de la pluralité de pages Web puisse être sélectionnée par la rotation de l'aiguille ;
le procédé comprend en outre l'affichage d'un nombre de la pluralité de pages Web ; et
les deuxièmes informations comprennent des informations associées à l'une de la pluralité de pages Web.

14. Procédé selon la revendication 13, comprenant en outre l'affichage d'informations relatives à une application suivante qui n'est pas le navigateur Web lorsque l'aiguille est tournée de plus qu'un angle de seuil.
